# EUROPÄISCHE PATENTSCHRIFT

(11) **EP 0 378 609 B1**
(45) Veröffentlichungstag und Bekanntmachung des Hinweises auf die Patenterteilung: **07.09.1994**
(21) Anmeldenummer: 89906111.3
(22) Anmeldetag: 24.05.1989
(51) Int. Cl.: H04B 1/66

(54) **VERFAHREN ZUR ÜBERTRAGUNG EINES AUDIOSIGNALS**
PROCESS FOR TRANSMITTING AN AUDIO SIGNAL
PROCEDE DE TRANSMISSION D'UN SIGNAL AUDIO

(30) Priorität: 26.05.1988 DE 3817864; 26.05.1988 DE 3817788; 26.05.1988 DE 3817789
(43) Veröffentlichungstag der Anmeldung: 25.07.1990
(73) Patentinhaber: Thomson Consumer Electronics Sales GmbH, 30453 Hannover (DE)
(72) Erfinder: DICKOPP, Gerhard, D-4150 Krefeld-Bockum (DE); Krahé, Detlef, D-4152 Kempen 3 (DE); VAUPEL, Thomas, D-4300 Essen 11 (DE)
(86) Internationale Anmeldenummer: EP8900568
(87) Internationale Veröffentlichungsnummer: WO8911759

(56) Entgegenhaltungen:
- EP-A- 0 193 143
- EP-A- 0 251 028
- WO-A-86/03873

## Beschreibung

Bei der Übertragung eines Audiosignals, z.B. bei der Rundfunkübertragung, Kabelübertragung, Satellitenübertragung und bei Aufzeichnungsgeräten ist es bekannt, das analoge Audiosignal in ein digitales Audiosignal mit einer bestimmten Auflösung umzuwandeln, in dieser Form zu übertragen und bei der Wiedergabe wieder in ein analoges Signal umzusetzen. Durch die digitale Übertragung wird insbesondere bei der Wiedergabe ein größerer Störabstand erreicht.

Die für die Übertragung eines solchen Signals erforderliche Bandbreite ist im wesentlichen bestimmt durch die Zahl der zu übertragenden Abtastwerte pro Zeiteinheit sowie durch die Auflösung.
In der Praxis besteht die Forderung, die für die Übertragung notwendige Bandbreite möglichst klein zu halten, um mit einem schmalbandigen Kanal auszukommen oder über einen vorhandenen Kanal möglichst vièle Audiosignale gleichzeitig übertragen zu können. Die erforderliche Bandbreite läßt sich an sich verringern durch eine Reduzierung der Abtastwerte oder der Anzahl der Bits pro Abtastwert.
Diese Maßnahme hat aber in der Regel eine Verschlechterung bei der Wiedergabe zur Folge. Bei einem bekannten Verfahren (DE-OS-35 06 912) wird zur Verbesserung der Wiedergabequalität das digitale Audiosignal in zeitlich aufeinanderfolgenden Abschnitten in ein Kurzzeitspektrum transformiert, welches jeweils für die Zeitabschnitte, z.B. 20ms, die Spektralkomponenten des Signals darstellt. In dem Kurzzeitsprektrum lassen sich auf Grund psyocho-akustischer Gesetzmäßigkeiten im allgemeinen Komponenten, die vom Hörer nicht wahrgenommen werden, also im nachrichtentechnischen Sinn irrelevant sind, besser auffinden, als im Zeitbereich. Diese Komponenten werden bei der Übertragung weniger gewichtet oder ganz weggelassen. Durch diese Maßnahme kann bei der Übertragung ein beträchtlicher Teil der sonst notwendigen Daten entfallen, so daß die mittlere Bitrate beträchtlich verringert werden kann.

In EP-A-0 251 028 werden Signale in Unterblöcke aufgeteilt und in Abhängigkeit von der Signal-Energie innerhalb der Unterblöcke vor der Übertragung expandiert.

Es hat sich jedoch gezeigt, daß bei Amplitudenschwankungen innerhalb eines solchen Abschnittes, insbesondere bei erst im Verlaufe eines Blocks aus der Ruhe einsetzenden Signalen, nach der Übertragung diese Signale mit Störungen überlagert werden. Die Ursache für die Wahrnehmbarkeit liegt darin darin, daß die Störungen auch vor dem Einsetzen der Signale auftreten und damit ungenügend verdeckt werden.

Diese Störungen können z.B. durch Quantisierungsrauschen entstehen, das sich dem Kurzzeitspektrum überlagert und bei dem nach dem Rücktransformation auch Rauschanteile innerhalb des gesamten Blocks im Zeitbereich auftreten.

Zur Verringerung dieser Störungen wird jeder Block in Unterblöcke aufgeteilt und die Amplitudensprünge der Signale von einem Unterblock zu einem benachbarten Unterblock detektiert. Bei Amplitudensprüngen von mehr als 20 dB werden die Signale im vorangegangenen Block komprimiert und nach der Rücktransformation expandiert.

Hierbei können folgende Schwierigkeiten auftreten:
a) Die Erkennung realer Sprünge ist unsicher.
b) Als Sprünge werden nur solche Energieänderungen in vorher bestimmten Unterblöcken bewertet, die ein bestimmtes Maß überschreiten.
c) Es kann aufgrund von Unsicherheiten in der vorgenommenen Energiedetektion zu unbeabsichtigten Signalüberhöhungen im angehobenen Signalabschnitt kommen.

Der Erfindung liegt die Aufgabe zugrunde, das eingangs genannte Verfahren dahingehend zu verbessern, daß bei Signalveränderungen innerhalb eines Blockes, wie sie in ihrer Vielfalt bei natürlichen Audiosignalen üblich sind, der Störabstand nach der Übertragung verbessert wird.

Diese Aufgabe wird durch die Merkmale des Anspruchs 1 gelöst.

Im Prinzip werden in jedem Unterblock der Blöcke, auf die das Audiosignal durch das Zeitfenster aufgeteilt wird, eine Signalkompression vorgenommen. Diese wird nicht mehr davon abhängig gemacht, daß reale Sprünge der Schwellwerte überschritten werden. Dadurch lassen sich die Auswirkungen und Störungen während der nachfolgenden Signalverarbeitung, gleich welchen Ursprungs sie sind, vermindern. Durch komplementäre Expansion der Signale in den Blöcken nach der Übertragung werden die ursprünglichen Signalverhältnisse wiederhergestellt, wobei der Störabstand gegenüber schwachen Signalen verbessert wird.

Nachfolgend wird die Erfindung an Hand der Zeichnung erläutert. Darin zeigen:
- Fig. 1: den zeitlichen Ablauf des erfindungsgemäßen Verfahrens,
- Fig. 2: eine Fensterung des Signals zur Erzielung der aufeinanderfolgenden Blöcke,
- Fig. 3a-d: die Darstellung eines im Verlaufe eines Blocks einsetzenden Signals im Original sowie nach der Rücktransformation,
- Fig. 4: die Aufteilung in Unterblöcke,
- Fig. 5: eine Fensterfunktion, mit der die Blöcke überlagert werden,
- Fig. 6: den Energieverlauf innerhalb eines Blockes mit und ohne Kompression,
- Fig. 7: eine Darstellung des nicht angehobenen und des angehobenen Signals bei einem Signalsprung bei nicht überlappenden Fenstern zur Energieberechnung der Unterblöcke,
- Fig. 8: eine Darstellung ähnlich Fig. 7, jedoch mit 50% überlappenden Fenstern zur Energieberechnung der Unterblöcke,
- Fig. 9-11: Blockschaltbilder zur Durchführung einer Signalkompression oder -expansion,
- Fig. 12: eine Übertragungsfunktion eines adaptiven Filters
- Fig. 13: ein Blockschaltbild mit Verfahrensschritten für die Senderseite,
- Fig. 14: ein Blockschaltbild mit Verfahrensschritten für die Empfängerseite,
- Fig. 15: eine grafische Darstellung der Anhebungsfaktoren der Unterblöcke eines Blockes,
- Fig. 16: eine grafische Darstellung ähnlich Fig. 15, bei der jedoch die Anhebungsfaktoren nach einem Signalsprung zu 1 gesetzt sind,
- Fig. 18: ein Schaltbeispiel für ein senderseitiges adaptives Filter und
- Fig. 19: ein Schaltbeispiel für ein empfängerseitiges adaptives Filter.

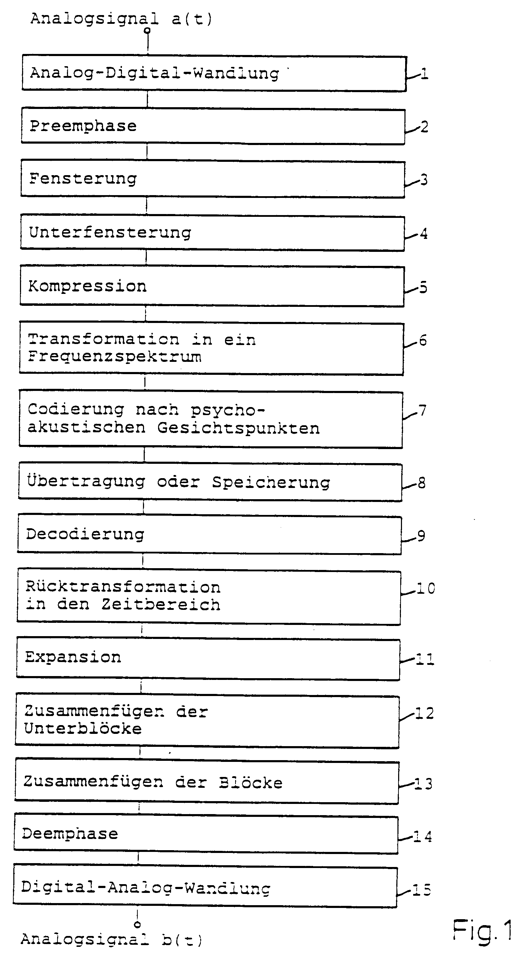

In Fig. 1 wird das Analogsignal a (t), das ein Audiosignal wie z.B. Sprache oder Musik darstellt, durch den bei 1 dargestellten Verfahrensschritt in ein entsprechendes digitales Signal umgewandelt. In dem bei 2 gezeigten zweckmäßigen, aber nicht zwingend notwendigen Verfahrensschritt wird das Signal einer Preemphase unterworfen, wobei vorzugsweise die höherfrequenten Spektralanteile des Audiosignals gegenüber den tieferfrequenten Anteilen angehoben werden. Durch diese Maßnahme soll der Effekt ausgeglichen werden, daß Signale mit niedrigen Frequenzen von Signalen mit hohen Frequenzen schlecht verdeckt werden. Um eine Verdeckung dennoch zu erzielen, muß die Anhebung umso stärker erfolgen, je weiter die Nutzfrequenz entfernt liegt.

In dem bei 3 dargestellten Verfahrensschritt erfolgt eine Fensterung des Signals, wodurch zeitlich aufeinanderfolgende Blöcke mit Signalabschnittenentstehen. Die Dauer dieser Blökke beträgt vorzugsweise 20 ms. Die Signale eines Blockes können später getrennt für sich weiterverarbeitet werden.

Bei 4 werden die Blöcke durch Wichtung mit einer Fensterfunktion in Unterblöcke unterteilt. Zweckmäßig ist eine Aufteilung in 10-20 Unterblöcke.

Im nachfolgenden, mit 5 bezeichneten Verfahrensschritt werden die Signale innerhalb der jeweiligen Unterblöcke konstant verstärkt oder geschwächt, wobei, wie noch weiter unten ausgeführt wird, mehrere Verfahrensschritte durchgeführt werden.

Zur Bestimmung der Verstärkungsfaktoren oder Schwächungsfaktoren werden die mittleren Leistungen aus den Unterblöcken entsprechenden Signalabschnitten als Detektionsabschnitten abgeleitet. Für die mittleren Leistungen in den Detektionsabschnitten werden dann Maßzahlen (Energie : Abschnittsdauer) gebildet. Diese Maßzahlen werden für die Detektionsabschnitte eines Blockes auf die Maßzahl des Detektionsabschnittes mit der größten Maßzahl bezogen. Aus den Maßzahlen werden dann die Verstärkungsfaktoren bestimmt, wobei proportionale oder auch quantisierte Verstärkungsfaktoren mit unterschiedlichen Quantisierungfaktoren gewählt werden können.

Zweckmäßig ist es, für kleine Verstärkungsfaktoren kleinere Quantisierungsstufenhöhen zu wählen als für größere. Der maximale Verstärkungsfaktor wird vorzugsweise auf einen Wert von 40 dB begrenzt. Nach Durchführung dieser Maßnahme wird in allen Unterblöcken etwa der gleiche Störabstand bezüglich der Nutzenergie und der durch die Kodierung entstehenden Störenergie erreicht.

Im mit 6 bezeichneten Verfahrensschritt wird anschließend das Signal des Blockes durch eine Transformation in ein Frequenzspektrum umgesetzt. Bei 7 erfolgt eine Kodierung nach psyocho akustischen Gesichtspunkten. Das bedeutet, daß Spektralkomponenten die bei der Wiedergabe insbesondere auf Grund von Verdeckungseffekten ohnehin nicht wahrgenommen werden, bei der Kodierung geringer gewichtet oder weggelassen werden. Mit 8 ist der Verfahrensschritt der Übertragung oder Speicherung dargestellt, wonach die vorbeschriebenen Verfahrensschritte im wesentlichen wieder in umgekehrter Reihenfolge rückgängig gemacht werden.

So erfolgt bei 9 zunächst eine Dekodierung, durch die das übertragene oder gespeicherte Signal wieder in ein Frequenzspektrum zurückgewandelt wird. Durch den mit 10 bezeichneten Verfahrensschritt wird das Kurzzeitspektrum wieder in den Zeitbereich überführt. Bei 11 werden auf Grund der übermittelten Verstärkungsfaktoren die in den Blöcken und Unterblökken vorhandenen Signale komplementär entzerrt. Bei 12 werden die Unterblöcke zu Blöcke zusammengefügt und bei 13 werden aus den Blöcken wieder ein zusammenhängende digitale Signale gebildet. Nach Durchführung einer Deemphase bei 14, die zu der Preemphase bei 2 komplementär gerichtet ist, wird eine Digital/Analog-Wandlung bei 15 durchgeführt, nach der schließlich das Analogsignal b (t) abgegriffen werden kann. Das Analogsignal b (t) ist nicht identisch mit dem Analogsignal a (t), weil bei der Kodierung Spektralkomponenten unterschiedlich gewichtet oder unter drückt werden. Der Unterschied zwischen den Analogsignalen b (t) und a (t) ist aber so, daß er bei der Wiedergabe vom Hörer nicht bemerkt wird.

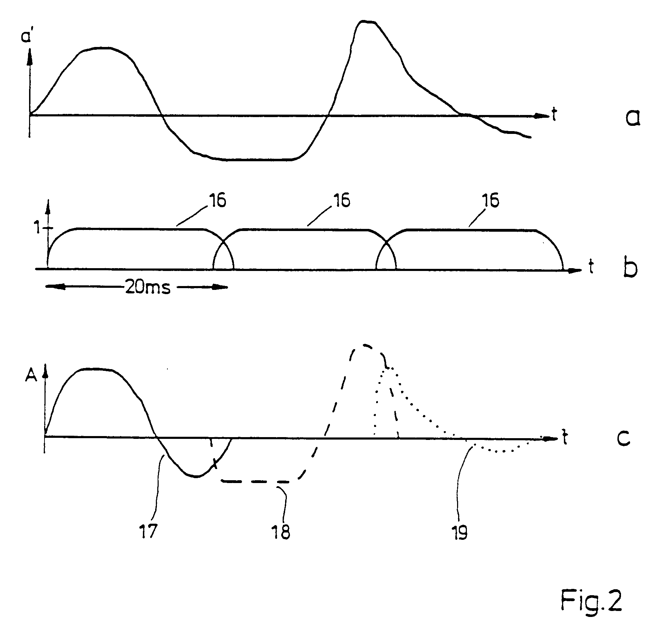

In Fig. 2 a,b,c ist die Fensterung des Signals a′ dargestellt, als deren Folge zeitlich aufeinanderfolgende Blöcke 17, 18 und 19 entstehen. Dies kann dadurch geschehen, daß das Signal a′ mit einer Amplitudenkennlinie 16 multipliziert wird. Die Kennlinie hat bei einer bevorzugten Ausführungsform am Anfang einen über eine viertel Periode sinusförmigen, danach einen konstanten Wert und am Ende einen kosinusförmigen Verlauf. Der stetige Verlauf an den Enden soll vermeiden, daß bei der späteren Transformation ein sehr breites Frequenzspektrum entstehen würde. Außerdem werden die Fenster so gelegt, daß eine Überlappung der Blöcke stattfindet. Im folgenden wird jedoch aus Gründen der besseren Darstellung von rechteckigen Amplitudenverläufen ausgegangen.

Die Fenster besitzen eine zeitliche Dauer von 20 ms. Diese Zeit hat sich als zweckmäßig erwiesen, um einerseits ein ausreichend fein aufgelöstes Kurzzeitspektrum zu erhalten, das bei der späteren Kodierung genügend Spektrallinien enthält, um eine wirksame Datenreduktion vornehmen zu können, und um andererseits bei Änderungen des Signals die Verstärkung relativ schnell auf den jeweils veränderten Zustand einzustellen und damit den psycho-akustischen Vor- und Nachverdeckungseffekt auszunutzen.

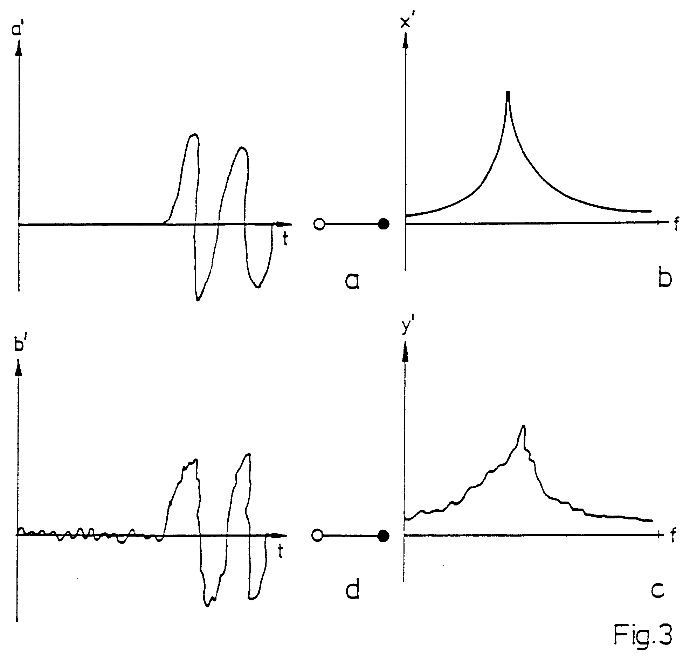

In der Praxis sind jedoch Fälle möglich, bei denen ein Signal aus der Ruhe plötzlich einsetzt und dieser Einsatz innerhalb eines Blockes, z.B. in dessen zweiter Hälfte stattfindet. Dieser Fall ist in Fig. 3a dargestellt. Das transformierte Signal zeigt Fig. 3b. Durch Quantisierungsfehler bei der Kodierung überlagert sich dem in Fig. 3b dargestellten Spektrum ein Störspektrum, so daß das in Fig. 3c dargestellte Spektrum entsteht. Nach Rücktransformation beeinflußt dieses Störspektrum den Signalverlauf nicht erst ab dem Einsatz des Signals sondern bereits zu Beginn des Blockes wie Fig. 3d zeigt. Da der Vorverdeckungseffekt geringer als der Nachverdeckungseffekt ist, kann diese Störung hörbar werden. Durch entsprechende Kompression innerhalb des Blockes vor der Transformation und Übertragung und Expansion nach der Übertragung und Rücktransformation kann der Störabstand erheblich verbessert werden.

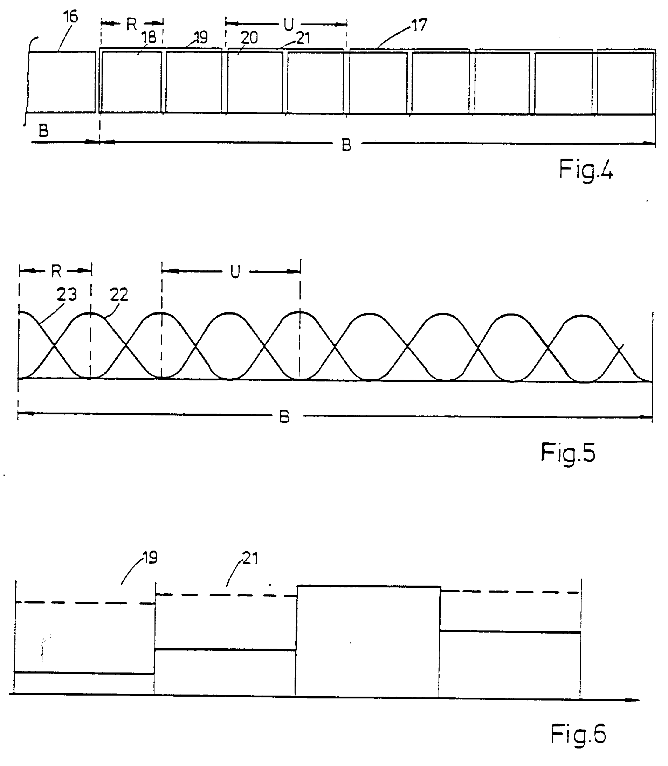

Zu diesem Zweck wird, wie in Fig. 4 dargestellt ist, jeder Block 16, 17... in Unterblöcke unterteilt. Diese Unterblöcke 19, 20, 21... haben außer an den Blockrändern gleiche zeitliche Ausdehnungen derart, daß sie sich jeweils zur Hälfte überlappen. An den Blockrändern besteht eine Überlappung mit Unterblöcken 18 der halben zeitlichen Ausdehnung. In diesen sich überlappenden rechteckigen Unterblöcken werden die mittleren Signalleistungen bestimmt (Energie im Zeitabschnitt dividiert durch die Ausdehnung des Zeitabschnitts).

In einem nachfolgenden Schritt werden, wie in Fig. 5 gezeigt ist, die zunächst rechteckigen Unterblöcke 19, 20, 21... mit cos²-Fensterfunktionen 22 bewertet. Die Zeitabschnitte an den Blockrändern, die nur die halbe zeitliche Ausdehnung der übrigen Unterblöcke besitzen, werden mit einem cos² -Halbfenster 23 gewichtet. Die sich überlappenden Gewichtsfunktionen ergänzen sich zu jedem Zeitpunkt des Signalblocks zu 1.

In Fig. 6 ist gezeigt, wie die Signale in den Unterblöcken 19, 20, 21 entsprechend den detektierten mittleren Leistungen, dargestellt durch die durchgezogenen Linien, so verstärkt, bzw. geschwächt werden, daß die mittleren Leistungen in den Unterblöcken 19, 20, 21... etwa gleich werden, dargestellt durch die gestrichelt gezeichneten Linien. Zwecks übersichtlicher Darstellung sind die Blöcke hier nicht gestrichelt gezeichnet. Durch die Verstärkung und Schwächung der Signale wird das Verhältnis zwischen der Blocknutzenergie und der durch die Kodierung entstehenden Blockstörenergie nicht verändert. Andererseits wird durch diese Maßnahme erreicht, daß nun in allen Unterblöcken der gleiche Störabstand besteht. Bezüglich des Störabstandes wird also dasselbe erreicht, wie wenn man von vorn herein durch Fensterung Blöcke gewählt hätte, die der Größe der Unterblöcke entsprechen würde. Die vorher erwähnten Nachteile kürzerer Blöcke werden jedoch vermieden.

Die sich überlappenden Unterblöcke werden zweckmäßig aus psycho-akustischen Gründen auf eine zeitliche Ausdehnung von ca. 2-4 ms bemessen. Bei Blöcken mit ca. 1000 Abtastwerten bei einer Abtastfrequenz von 44,1 kHz entspricht dies der Bildung von ca. 10-20 Unterblöcken. Weiterhin ist es zweckmäßig aus psycho-akustischen Gründen die Signalverstärkung auf einen Maximalwert von z.B. 40 dB zu begrenzen.

Es reicht aus, die Verstärkungsfaktoren zu quantisieren, wobei die Quantisierung relativ grob durchgeführt werden kann, um die für die Quantisierungsstufen notwendigen zusätzlichen Daten zu begrenzen. Die Quantisierung kann so vorgenommen werden, daß für kleinere Verstärkungsfaktoren kleinere Quantisierungsstufenhöhen gewählt werden als für größere. Dabei wird die Quantisierung so bemessen, daß die mittlere Leistung im angehobenen Unterblock die im Unterblock mit der höchsten detektierten mittleren Leistung, also dem Bezugsblock, nicht übersteigt. Auf diese Weise ist es möglich, so gar einen Gewinn im Verhältnis der Blocknutzenergie zur Blockstörenergie zu erzielen. In diesem Fall ist der Störabstand allen Unterblöcken aber nicht mehr identisch, sondern nur noch annähernd gleich.

Wenn nur die Unterblöcke, in denen die Kompression des Signals stattfindet, durch überlappende Fensterfunktionen gewichtet sind, nicht aber die Unterblöcke, die zur Ermittlung der mittleren Signalleistungen zur Berechnung der Verstärkungsfaktoren dienen, können sich bei bestimmten Signalsprüngen überhöhte Verstärkungsfaktoren ergeben.

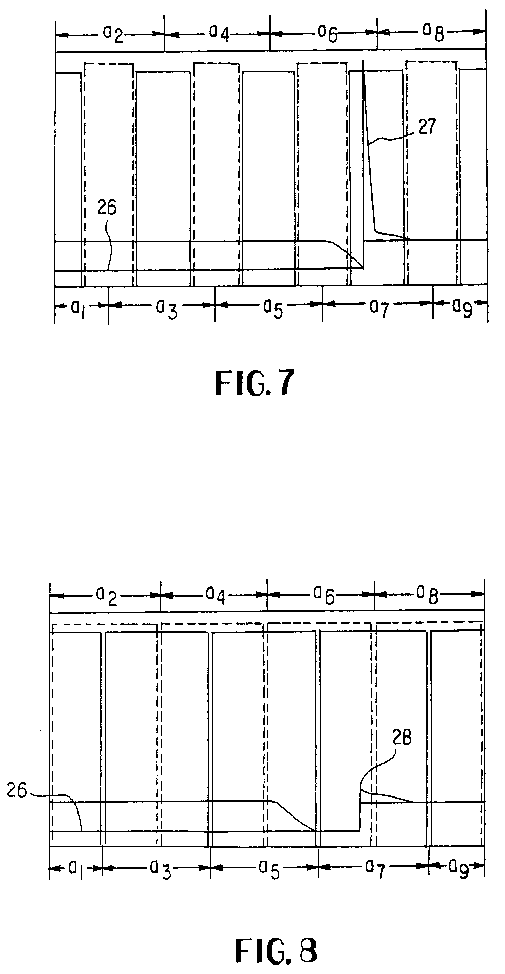

Dieser Fall ist in Fig. 7 für einen idealen Rechtecksprung dargestellt. Der nicht angehobene Signalverlauf ist mit 26, der angehobene Signalverlauf mit 27 bezeichnet. Die kleinen Buchstaben a₀ bis a₈ stehen für die Anhebungsfaktoren oder auch als Verstärkungsfaktoren bezeichnet. Die Überhöhung tritt dann auf, wenn die Sprungflanke und die Unterblockgrenze nicht übereinstimmen.

Um die Überhöhung klein zu halten, wird gemäß einer Weiterbildung die Ermittlung der mittleren Signalleistungen ebenfalls in Blöcken mit 50% Überlappung vorgenommen, hier allerdings mit Rechteckfenstern. Sie entsprechen direkt den Unterblöcken, in denen die Signale verstärkt werden. Das Ergebnis dieser Maßnahme ist in Fig. 8 für den gleichen Signalsprung dargestellt. Mit 26 ist wieder die nicht angehobene Signalverlauf, 28 diesmal der angehobene veränderte Signalverlauf bezeichnet.

Wendet man das bis hierhin erläuterte Verfahren auf das komplette Audiosignal an, so sind die Verstärkungsfaktoren nur für die energiereichen Spektralanteile richtig, da diese im wesentlichen die Faktoren bestimmen. In Audiosignalen sind fast immer die Spektralanteile bis ca. 3 kHz die energiereichsten.

Besitzt das Verfahren für die energiereichen Spektralanteile bis ca. 3 kHz die größte Darstellungsgenauigkeit, so können Signalsprünge bei höheren Frequenzen mit geringeren Energieanteilen zu größeren Ungenauigkeiten bei der Codierung führen, was zu eventuell höhrbaren Störungen führt.

Gemäß einer ersten Alternative kann das Signal vor der Übertragung und Codierung einer Preemphase und nach der Übertragung und Decodierung einer Deemphase unterworfen werden.

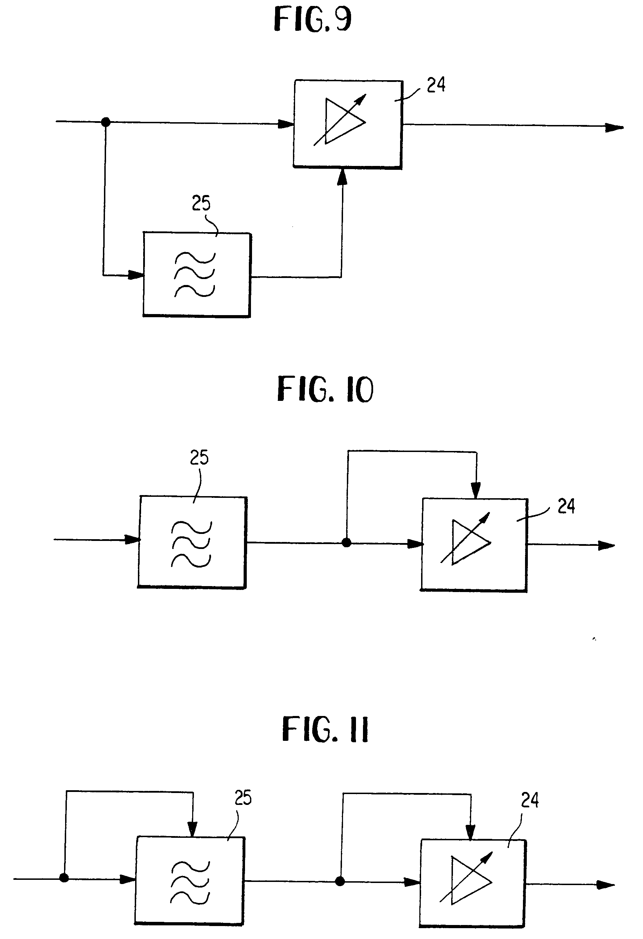

Fig. 9 bis 11 zeigen Blockschaltbilder zur Durchführung einer Kompression bzw. Expansion zusammen mit einer Preemphase bzw. Deemphase. Die Schaltungen enthalten jeweils einen steuerbaren Verstärker 24 und ein Filter 25.

In Fig. 9 ist nur der steuerbare Verstärker 24 im Signalweg angeordnet. Das Filter 25 befindet sich im Steuersignalweg. Wird diese Schaltung durch inverse Steuerung zur komplementären Expansion verwendet, so kann das Filter 25 entfallen.

In Fig. 10 ist das Filter 25 dem steuerbaren Verstärker 24 vorgeschaltet. Diese Ausgestaltung benötigt auch bei der Expansion ein Filter.

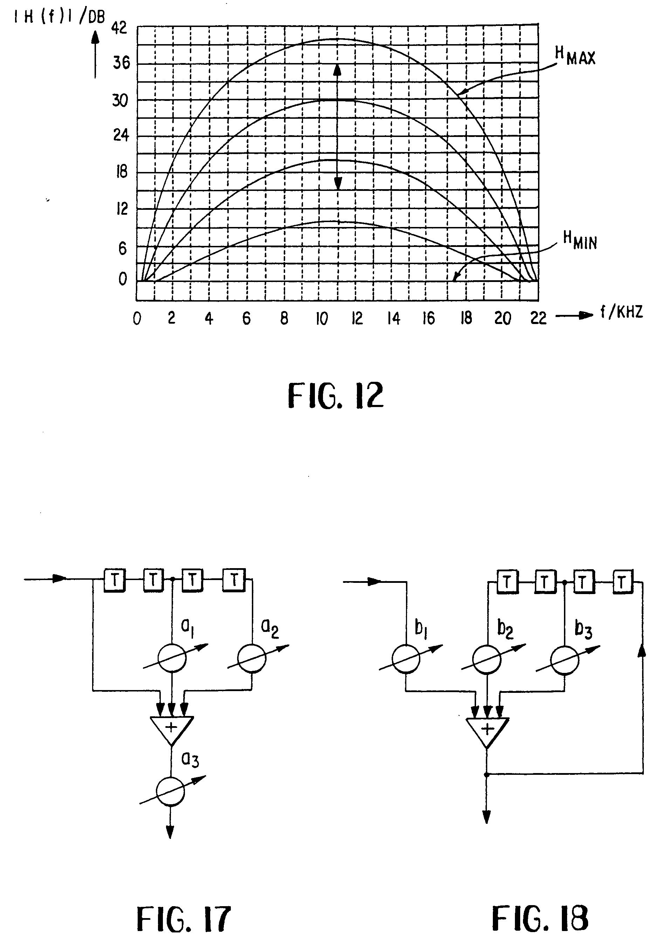

In Fig. 11 ist das Filter 25 ebenfalls dem steuerbaren Verstärker 24 vorgeschaltet und zusätzlich selbst steuerbar ausgebildet. Die Grenzfrequenz kann dabei so verschoben werden, daß praktisch immer eine Verdeckung erzielbar ist. Bei der Expansion sind das steuerbare Filter 25 sowie der steuerbare Verstärker 24 invers anzusteuern.

Eine weitere Alternative besteht darin, statt einer festen Pre- und Deemphase eine frequenzselektive Signalanhebung vorzunehmen, wobei ein adaptives Filter verwendet wird. Die Übertragungsfunktion eines derartigen adaptiven Filters für verschiedene Verstärkungen ist in Fig. 12 dargestellt. Das Filter betont dabei nur die mittleren Frequenzen und läßt die unteren sowie die oberen Frequenzen unberücksichtigt.

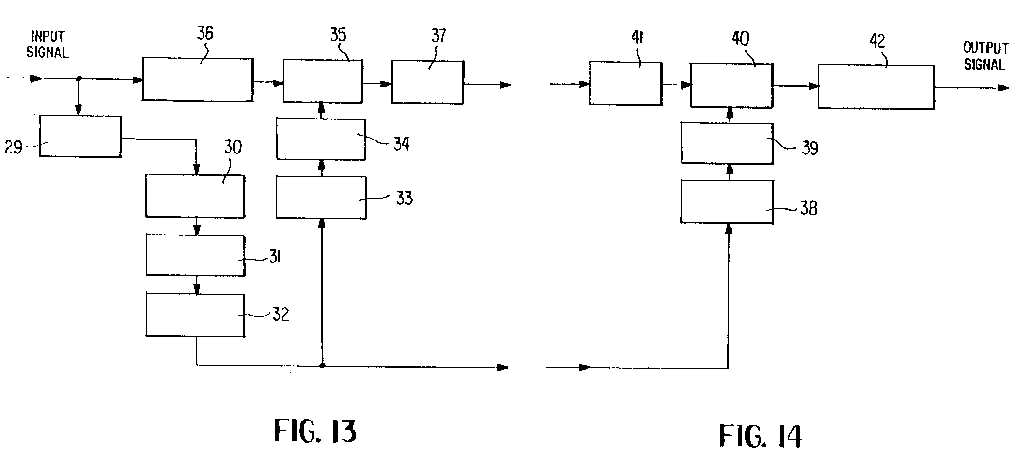

Die Figuren 13 und 14 zeigen Blockschaltbilder mit Verfahrensschritten zur Durchführung des Verfahrens einschließlich der adaptiven Filterung und zwar Fig. 13 für die Senderseite und Fig. 14 für die Empfängerseite.

Senderseitig wird das Eingangssignal zunächst mittels eines festen Bandpaßfilters 29 auf die Signalanteile reduziert, die für die Ermittlung der Filterkoeffizienten relevant sind. Dieses Bandpaßfilter 29 sollte in seiner Charakteristik dem adaptiven Filter, wie sie in Fig. 12 dargestellt ist, vergleichbar sein. Das Ausgangssignal dieses Bandpasses 12 wird bei 30 z.B. in Blöcke mit vorzugsweise 1024 Abtastwerten eingeteilt, wobei sich die Blöcke jeweils um 6,25 % überlappen. Die so entstehenden Blöcke entsprechen in ihrer zeitlichen Lage den Blöcken, die später dem adaptiven Filter zugeführt werden. Alternativ kann die feste Bandpaßfilterung auch nach einer entsprechenden Blockbildung für einen einzelnen Block durchgeführt werden. Alle nachfolgenden Bearbeitungsschritte ändern sich dadurch nicht.

Die gefilterten Signalblöcke werden mit sich zu 50 % überlappenden Rechteckfenstern in 31 in z.B. 9 Unterblöcke eingeteilt. Die mittlere Signalleistung aus diesen Blöcken wird ermittelt und das Maximum dieser Signalleistungen wird als Bezugsgröße definiert. Anschließend werden in 32 die Anhebungsfaktoren für jeden Unterblock berechnet, die sich auf diese Bezugsgröße beziehen. Mathematisch lassen sich die Anhebungsfaktoren fᵢ = P_{Bezug} / Pᵢ. Dabei ist fᵢ der Faktor des i-ten Blocks, P_{Bezug} die Bezugsgröße und Pᵢ die mittlere Leistung des i-ten Blocks.

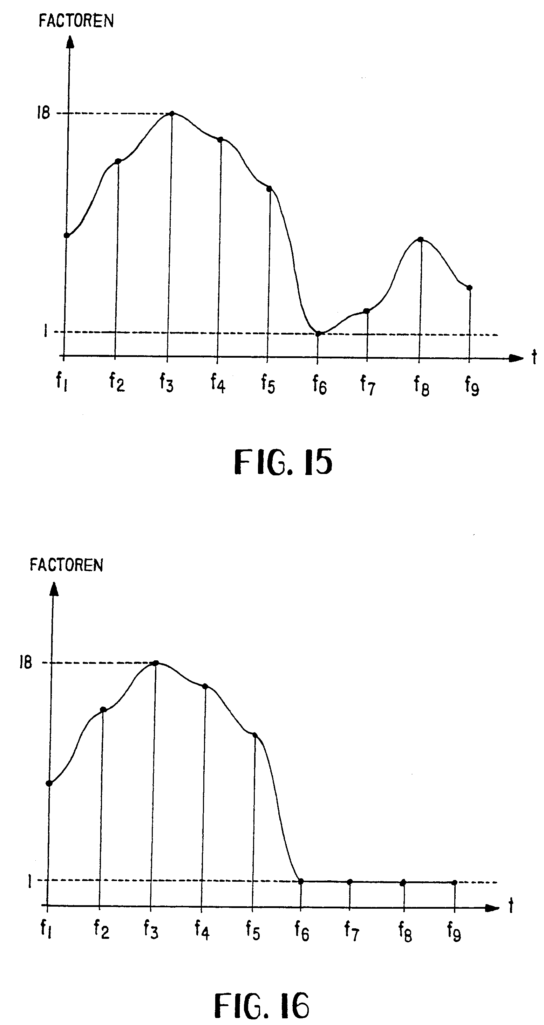

Die Faktoren fᵢ sollen an den in Fig. 15 mit einem Kreuz gekennzeichneten Stützstellen gelten und werden dem Empfänger mitgeteilt. Für die vollständige adaptive Filterung müssen in 33 die vorliegenden 9 Werte auf 1024 extra poliert werden, indem zwischen den Stützstellen die Faktoren fᵢ weich ineinander überblendet werden. Der entsprechende Faktorverlauf für alle 1024 Abtastwerte eines Blocks ist für ein Beispiel in Fig. 15 durch die ausgezogene Linie dargestellt, wenn alle Faktoren unverändert bleiben.

Unter Berücksichtigung psychoakustischer Kriterien können die Faktoren jedoch nach einem Signalsprung zu 1 gesetzt werden, da die Nachverdeckung besser als die Vorverdeckung wirkt. Dieser Fall ist in Fig. 16 wiedergegeben. Die Überblendung geschieht im vorliegenden Fall mittels Kosinusquadratfunktionen.

Aus den dargestellten Faktorverläufen können in 34 die Filterkoeffizienten a₁ bis a₃ für ein adaptives Filter 35, wie es als Beispiel in Fig. 17 dargestellt ist, zu jedem Abtastwert berechnet werden. Es entsteht ein adaptives Filter, deswert berechnet sich beim Einlesen eines jeden Abtastwertes ändert. Dieses Filter wird so bemessen, daß es etwa zwischen den in Fig. 12 dargestellten Betragsfunktion variiert werden kann. Die Übertragungsfunktion für den Faktor 1 ist dort mit Hₘᵢₙ gekennzeichnet und die Übertragungsfunktion für den maximal zulässigen Faktor von vorzugsweise 10000 ist mit Hₘₐₓ gekennzeichnet. Das so errechnete adaptive Filter wird auf den in 36 erhaltenen ungefilterten Block angewendet, der aus dem kontinuierlichen Signal entnommen und bereits mit dem Analysefenster bewertet wurde. Es werden somit nur die Signalanteile im mittleren Frequenzbereich angehoben, tieffrequente sowie hochfrequente Signalanteile bleiben weitgehend unverändert. Der so gefilterte Block wird dem Codierer 37 zugeführt.

Die Faktoren fᵢ können beispielsweise logarithmisch quantisiert und mit jeweils 5 Bit übertragen werden. Im Empfänger werden hieraus nach entsprechender Extrapolation in 38 anschließend in 39 wieder die 1024 Faktoren die die Filterkoeffizienten b₁ bis b₃ für ein inverses Filter 40 bestimmt, für das ein Beispiel in Fig. 18 dargestellt ist. Mit diesem Filter wird der Block nach der Decodierung in 41 im Empfänger gefiltert, um die Anhebung wieder rückgängig zu machen. Anschließend wird der Block mit dem Synthesefenster in 42 bewertet und ein kontinuierliches Signal durch Aneinanderreihung der Blöcke erzeugt.

## Patentansprüche

1. Verfahren zur Übertragung eines Audiosignals (a′), das durch Zeitfenster (3) in zeitlich aufeinanderfolgende Blöcke (17, 18, 19) aufgeteilt (30) wird, dann die in den Blöcken enthaltenen Signalanteile durch Transformation (6) in ein Kurzzeitspektrum umgewandelt werden, anschließend die Kurzzeitspektren auf der Basis psycho-akustischer Gesetzmäßigkeiten codiert (7, 37) und übertragen (8) werden und nach der Übertragung decodiert (9) werden, die Kurzzeitspektren durch Rücktransformation (10) wieder in den Zeitbereich überführt werden und schließlich die im Zeitbereich vorliegenden Blöcke aneinandergefügt (13) werden, wobei die Blöcke in Unterblöcke (4, 31) aufgeteilt werden, die Signale in den Unterblöcken vor der Transformation einer Kompression/Expansion (5) und nach der Rücktransformation einer komplementären Expansion/Kompression (11) unterzogen werden, **dadurch gekennzeichnet**, daß das Signal in Abhängigkeit von den mittleren Signalleistungen in den Unterblöcken (4, 31) in diesen bei der Kompression/Expansion verstärkt und/oder geschwächt (32) und bei der Expansion/Kompression komplementär behandelt (40) wird, wobei kleinere mittlere Signalleistungen mit großen Verstärkungsfaktoren und große mittlere Signalleistungen mit kleineren Verstärkungsfaktoren verknüpft werden.

2. Verfahren nach Anspruch 1, **dadurch gekennzeichnet**, daß die maximale Änderung der zeitabhängigen Verstärkung und/oder Schwächung begrenzt wird.

3. Verfahren nach Anspruch 1 oder 2, **dadurch gekennzeichnet**, daß die Unterteilung der Blöcke in Unterblöcke (31) durch Gewichtung mit Fensterfunktionen (4, 16) erfolgt, die über dem Zeitabschnitt einen konstanten Wert aufweisen.

4. Verfahren nach Anspruch 3, **dadurch gekennzeichnet**, daß sich die Fensterfunktionen (16) überlappen und die Blöcke an ihren beiden Rändern mit Fensterfunktionen der halben zeitlichen Breite gewichtet werden.

5. Verfahren nach Anspruch 4, **dadurch gekennzeichnet**, daß die Blöcke mit weiteren, "weichen" Fensterfunktionen gewichtet werden, die einen stetigen Verlauf aufweisen, an den Grenzen der Unterblöcke zu Null werden und sich im gesamten Block zu einem konstanten Gewichtungswert, vorzugsweise zu 1, ergänzen.

6. Verfahren nach einem der Ansprüche 3 bis 5, **dadurch gekennzeichnet**, daß die Fensterfunktionen außer an den Blockrändern Hanning-Fenster enspr. cos²-Fenster und an den Blockrändern cos²-Halbfenster sind.

7. Verfahren nach einem der Ansprüche 3 bis 6, **dadurch gekennzeichnet**, daß die Verstärkungsfaktoren bzw. Schwächungsfaktoren aus den mittleren Leistungen in den Unterblöcken entsprechenden Signalabschnitten als Detektionsabschnitten abgeleitet werden.

8. Verfahren nach einem der Ansprüche 3 bis 6, **dadurch gekennzeichnet**, daß auch die Detektionsabschnitte wie die Unterblöcke durch Gewichtung der Blöcke mit Fensterfunktionen gewonnen werden, die über dem Zeitabschnitt einen konstanten Wert besitzen.

9. Verfahren nach Anspruch 8, **dadurch gekennzeichnet**, daß sich die Fensterfunktionen überlappen.

10. Verfahren nach einem der Ansprüche 7 bis 9, **dadurch gekennzeichnet**, daß für die mittleren Leistungen in den Detektionsabschnitten Maßzahlen, z.B. Energie geteilt durch Abschnittdauer, gebildet werden.

11. Verfahren nach Anspruch 10, **dadurch gekennzeichnet**, daß die Maßzahlen für die Detektionsabschnitte eines Blocks auf die Maßzahl eines Detektionsabschnittes, vorzugsweise desjenigen mit der größten Maßzahl, bezogen werden und daß die entstehenden Maßzahlverhältnisse die Verstärkungsfaktoren, vorzugsweise proportional, bestimmen.

12. Verfahren nach Anspruch 11, **dadurch gekennzeichnet**, daß quantisierte Verstärkungsfaktoren gewählt werden.

13. Verfahren nach Anspruch 12, **dadurch gekennzeichnet**, daß die Quantisierung ungleichmäßig durchgeführt wird, vorzugsweise derart, daß für kleine Verstärkungsfaktoren kleinere Quantisierungsstufenhöhen gewählt werden als für größere.

14. Verfahren nach einem der Ansprüche 1 bis 13, **dadurch gekennzeichnet**, daß die Verstärkungsfaktoren auf einen Maximalwert von vorzugsweise 40dB begrenzt werden.

15. Verfahren nach einem der Ansprüche 1 bis 14, **dadurch gekennzeichnet**, daß die Signale vor der Blockbildung einer Preemphase (24, 25) und nach der Übertragung und Aneinanderfügung der Blöcke einer komplementären Deemphase unterworfen werden.

16. Verfahren nach Anspruch 15, **dadurch gekennzeichnet**, daß durch die Preemphase höherfrequente Spektralanteile des Audiosignals gegenüber tieferfrequenten Anteilen angehoben werden.

17. Verfahren nach einem der Ansprüche 1 bis 14, **dadurch gekennzeichnet**, daß die Signale, welche zur Bestimmung der mittleren Signalleistungen in den Unterblöcken dienen, frequenzabhängig, vorzugsweise mittels eines Bandpaßfilters (29), gefiltert werden und daß die Kompression und Expansion ebenfalls frequenzabhängig durchgeführt wird.

18. Verfahren nach Anspruch 17, **dadurch gekennzeichnet**, daß aus den Signalen, welche zur Bestimmung der mittleren Signalleistungen in den Unterblöcken dienen, Maßzahlen zur Veränderung eines adaptiven Bandpasses gewonnen werden, mittels dem die Kompression und Expansion durchgeführt wird.

19. Verfahren nach Anspruch 18, **dadurch gekennzeichnet**, daß der adaptive Bandpaß als Transversalfilter mit drei Koeffizienten ausgeführt ist.

20. Verfahren nach Anspruch 18 oder 19, **dadurch gekennzeichnet**, daß aus den Maßzahlen, die zunächst für jeden Unterblock auf denjenigen mit der höchsten Signalleistung bezogen sind, für jeden Abtastwert in den Unterblöcken Zwischenwerte extrapoliert werden und daß das adaptive Filter bei jedem Abtastwert entsprechend den extrapolierten Zwischenwerten verändert wird.

21. Verfahren nach Anspruch 20, **dadurch gekennzeichnet**, daß in den Unterblöcken, die nach dem Unterblock mit der höchsten Signalleistung folgen, die Maßzahlen gleich dem Bezugswert dieses Unterblocks mit der höchsten Signalleistung gesetzt werden, d.h., daß in diesen Unterblöcken keine Änderung des adaptiven Filters in Abhängigkeit der Abtastwerte mehr vorgenommen wird.

22. Verfahren nach Anspruch 20 oder 21, **dadurch gekennzeichnet**, daß nur die der Anzahl der Unterblöcke entsprechenden, als Stützwerte dienenden Maßzahlen übertragen werden und gegebenenfalls zusätzlich die Extrapolationsvorschrift übertragen wird und daß empfangsseitig die extrapolierten Zwischenwerte rekonstruiert und zur Durchführung der Expansion invertiert werden.

23. Verwendung des Verfahrens nach einem der Ansprüche 1 bis 22 bei der Rundfunkübertragung, Kabelübertragung, Satellitenübertragung oder bei Aufzeichnungsgeräten.

## Claims

1. Method of transmitting an audio signal (a′), which is divided (30) by time window (3) into chronologically successive blocks (17, 18, 19), then the signal components contained in the blocks are converted by transformation (6) into a short-time spectrum, then the short-time spectra are coded on the basis of psychoacoustic characteristics (7, 37) and transmitted (8) and after transmission are decoded (9), the short-time spectra are translated by retransformation (10) back into the time domain and finally the blocks in the time domain are joined together (13), with the blocks being subdivided into sub-blocks (4, 31), the signals in the sub-blocks being subjected prior to transformation to compression/expansion (5) and after retransformation to complementary expansion/compression (11), **characterized in that** the signal as a function of the mean signal outputs in the sub-blocks (4, 31) is amplified and/or attenuated (32) in said sub-blocks during compression/expansion and during expansion/compression is subjected to complementary treatment (40), with lower mean signal outputs being linked with high amplification factors and high mean signal outputs being linked with lower amplification factors.

2. Method according to claim 1, **characterized in that** the maximum change in the time-dependent amplification and/or attenuation is limited.

3. Method according to claim 1 or 2, **characterized in that** the subdivision of the blocks into sub-blocks (31) is effected by weighting with window functions (4, 16) which have a constant value over the time portion.

4. Method according to claim 3, **characterized in that** the window functions (16) overlap and the blocks at their two edges are weighted with window functions of half the time width.

5. Method according to claim 4, **characterized in that** the blocks are weighted with further "soft" window functions, which have a continuous shape, become zero at the boundaries of the sub-blocks and sum in the entire block to a constant weighting value, preferably to 1.

6. Method according to one of claims 3 to 5, **characterized in that** the window functions, apart from at the block edges, are Hanning windows corresponding to cos² windows and at the block edges are cos² half-windows.

7. Method according to one of claims 3 to 6, **characterized in that** the amplification factors and/or attenuation factors are derived from the mean outputs in the signal portions corresponding to sub-blocks, as detection portions.

8. Method according to one of claims 3 to 6, **characterized in that** the detection portions like the sub-blocks are gained by weighting of the blocks with window functions which have a constant value over the time portion.

9. Method according to claim 8, **characterized in that** the window functions overlap.

10. Method according to one of claims 7 to 9, **characterized in that** dimensions, e.g. energy divided by portion length, are formed for the mean outputs in the detection portions.

11. Method according to claim 10, **characterized in that** the dimensions for the detection portions of a block are related to the dimension of a detection portion, preferably the detection portion having the greatest dimension, and that the resulting dimension ratios determine, preferably proportionally, the amplification factors.

12. Method according to claim 11, **characterized in that** quantized amplification factors are selected.

13. Method according to claim 12, **characterized in that** the quantization is effected non-uniformly, preferably in such a way that lower quantization stage levels are selected for low amplification factors than for higher ones.

14. Method according to one of claims 1 to 13, **characterized in that** the amplification factors are limited to a maximum value of preferably 40 dB.

15. Method according to one of claims 1 to 14, **characterized in that** the signals are subjected, prior to block formation, to pre-emphasis (24, 25) and, after transmission and joining together of the blocks, to complementary de-emphasis.

16. Method according to claim 15, **characterized in that** the pre-emphasis accentuates higher-frequency spectral components of the audio signal compared to lower-frequency components.

17. Method according to one of claims 1 to 14, **characterized in that** the signals, which are used to determine the mean signal outputs in the sub-blocks, are filtered as a function of frequency, preferably with the aid of a bandpass filter (29), and that compression and expansion is likewise effected as a function of frequency.

18. Method according to claim 17, **characterized in that** from the signals, which are used to determine the mean signal outputs in the sub-blocks, dimensions are obtained for varying an adaptive bandpass, by means of which compression and expansion are effected.

19. Method according to claim 18, **characterized in that** the adaptive bandpass takes the form of a transverse filter with three coefficients.

20. Method according to claim 18 or 19, **characterized in that** from the dimensions, which initially for each sub-block are related to the sub-block with the highest signal output, intermediate values are extrapolated for each sample in the sub-blocks and that the adaptive filter for each sample is varied according to the extrapolated intermediate values.

21. Method according to claim 20, **characterized in that** in the sub-blocks following the sub-block with the highest signal output, the dimensions are set equal to the reference value of said sub-block with the highest signal output, i.e. in said sub-blocks there is no longer any change of the adaptive filter in dependence upon the samples.

22. Method according to claim 20 or 21, **characterized in that** only the dimensions corresponding to the number of sub-blocks and serving as supporting values are transmitted and possibly the extrapolation specification is additionally transmitted and that at the receiving end the extrapolated intermediate values are reconstructed and inverted to effect expansion.

23. Use of the method according to one of claims 1 to 22 for radio transmission, cable transmission, satellite transmission or in recording devices.

## Revendications

1. Procédé pour la transmission d'un signal son (a′) qui est réparti (30) par des fenêtres de temps (3) en blocs qui se succèdent dans le temps (17, 18, 19), les portions de signal contenues dans les blocs étant transformées par transformation (6) en un spectre de courte durée, les spectres de courte durée étant ensuite codés (7, 37) et transmis (8) sur la base de lois psycho-acoustiques et étant décodés (9) après la transmission, les spectres de courte durée étant retransmis dans la plage de temps par transformation inverse (10) et les blocs qui existent dans la plage de temps étant finalement assemblés (13) les uns aux autres, les blocs étant répartis en sous-blocs (4, 31), les signaux dans les sous-blocs étant soumis avant la transformation à une compression/expansion (5) et, après la transformation inverse, à une expansion/compression (11) complémentaire, **caractérisé en ce** que le signal est amplifié et/ou atténué (32) lors de la compression/expansion en fonction des puissances moyennes de signal dans les sous-blocs (4, 31) dans ceux-ci et étant traité (40) de manière complémentaire lors de l'expansion/compression, des puissances moyennes de signal plus petites étant combinées à des facteurs d'amplifications élevés et des puissances moyennes de signal élevées à des facteurs d'amplification plus petits.

2. Procédé selon la revendication 1, **caractérisé en ce** que la variation maximale de l'amplification et/ou de l'atténuation en fonction du temps est limitée.

3. Procédé selon la revendication 1 ou 2, **caractérisé en ce** que la division des blocs en sous-blocs (31) se fait par pondération avec des fonctions de fenêtre (4, 16) qui présentent une valeur constante pendant la période de temps.

4. Procédé selon la revendication 3, **caractérisé en ce** que les fonctions de fenêtre (16) se chevauchent et que les blocs sont pondérés sur leurs deux bords avec des fonctions de fenêtre de la moitié de la largeur temporelle.

5. Procédé selon la revendication 4, **caractérisé en ce** que les blocs sont pondérés avec d'autres fonctions de fenêtre "douces" qui présentent une allure continue, qui deviennent zéro aux limites des sous-blocs et qui se complètent dans l'ensemble du bloc en une valeur de pondération constante, de préférence en 1.

6. Procédé selon l'une des revendications 3 à 5, **caractérisé en ce** que les fonctions de fenêtre sont, à part sur les bords des blocs, des fenêtres de Hanning correspondant à des fenêtres à cos² et des demies fenêtres à cos² sur les bords des blocs.

7. Procédé selon l'une des revendications 3 à 6, **caractérisé en ce** que les facteurs d'amplification et/ou d'atténuation sont dérivés comme portions de détection à partir des portions de signal qui correspondent aux puissances moyennes dans les sous-blocs.

8. Procédé selon l'une des revendications 3 à 6, **caractérisé en ce** que les portions de détection comme les sous-blocs sont obtenus par pondération des blocs avec des fonctions de fenêtre qui possédent une valeur constante pendant la période de temps.

9. Procédé selon la revendication 8, **caractérisé en ce** que les fonctions de fenêtre se chevauchent.

10. Procédé selon l'une des revendications 7 à 9, **caractérisé en ce** que des chiffres d'indice, par exemple énergie divisée par durée de la période, sont formés pour les puissances moyennes dans les portions de détection.

11. Procédé selon la revendication 10, **caractérisé en ce** que les chiffres d'indice pour les portions de détection d'un bloc se rapportent au chiffre d'indice d'une portion de détection, de préférence de celle avec le plus grand chiffre d'indice, et que les rapports de chiffre d'indice qui se forment déterminent les facteurs d'amplification, de préférence proportionnellement.

12. Procédé selon la revendication 11, **caractérisé en ce** que des facteurs d'amplification quantifiés sont choisis.

13. Procédé selon la revendication 12, **caractérisé en ce** que la quantification est effectuée de manière inégale de préférence de telle manière que pour de petits facteurs d'amplification des niveaux de degré de quantification plus petits sont choisis que pour des plus grands.

14. Procédé selon l'une des revendications 1 à 13, **caractérisé en ce** que les facteurs d'amplification sont limités à une valeur maximale qui est de préférence de 40 dB.

15. Procédé selon l'une des revendications 1 à 14, **caractérisé en ce** que les signaux sont soumis avant la formation de blocs à une pré-accentuation (24, 25) et après la transmission et l'assemblage des blocs à une désaccentuation complémentaire.

16. Procédé selon la revendication 15, **caractérisé en ce**, par la pré-accentuation, des fractions spectrales du signal son de plus haute fréquence sont accentuées par rapport aux fractions de fréquence plus basse.

17. Procédé selon l'une des revendications 1 à 14, **caractérisé en ce** que les signaux, qui servent à déterminer les puissances moyennes du signal dans les sous-blocs, sont filtrés en fonction de la fréquence, de préférence à l'aide d'un filtre passe-bande (29) et que la compression et l'expansion sont également effectuées en fonction de la fréquence.

18. Procédé selon la revendication 17, **caractérisé en ce** que des chiffres d'indice pour modifier un passe-bande adaptatif sont obtenus à partir des signaux qui servent à déterminer les puissances moyennes de signal dans les sous-blocs, filtre à l'aide duquel la compression et l'expansion sont effectuées.

19. Procédé selon la revendication 18, **caractérisé en ce** que le passe-bande adaptatif est réalisé comme un filtre transversal avec trois coefficients.

20. Procédé selon la revendication 18 ou 19, **caractérisé en ce** qu'à partir des chiffres d'indice qui se rapportent tout d'abord pour chaque sous-bloc à celui qui a la puissance de signal la plus élevée, des valeurs intermédiaires sont extrapolées pour chaque valeur de balayage dans les sous-blocs et que le filtre adaptatif est modifé pour chaque valeur de balayage conformément aux valeurs intermédiaires extrapolées.

21. Procédé selon la revendication 20, **caractérisé en ce** que, dans les sous-blocs qui suivent le sous-bloc avec la puissance de signal la plus élevée, les chiffres d'indice sont mis égaux à la valeur de référence de ce sous-bloc avec la puissance de signal la plus élevée, c'est-à-dire qu'il n'est plus effectué dans ces sous-blocs de modification du filtre adaptatif en fonction des valeurs de balayage.

22. Procédé selon la revendication 20 ou 21, **caractérisé en ce** que seuls les chiffres d'indice, qui servent de valeurs de soutien, qui correspondent au nombre des sous-blocs sont transmis et éventuellement en plus la prescription d'extrapolation et que côté réception les valeurs intermédiaires extrapolées sont reconstruites et inversées pour effectuer l'expansion.

23. Utilisation du procédé selon l'une des revendications 1 à 22 pour la radiodiffusion, la transmission par câbles, la transmission par satellites ou pour les appareils d'enregistrement.
